# EUROPÄISCHE PATENTSCHRIFT

(11) **EP 3 354 388 B1**
(45) Veröffentlichungstag und Bekanntmachung des Hinweises auf die Patenterteilung: **09.10.2024**
(21) Anmeldenummer: 17000758.7
(22) Anmeldetag: 03.05.2017
(51) Int. Cl.: B23C 3/12, B27D 5/00, B27G 13/00, B23C 5/00, B23Q 35/04

(54) **ZERSPANUNGSWERKZEUG**
CHIPPING TOOL
OUTIL D'ENLÈVEMENT DE COPEAUX

(30) Priorität: 25.01.2017 EP 17000141
(43) Veröffentlichungstag der Anmeldung: 01.08.2018
(73) Patentinhaber: Ledermann GmbH & Co. KG, 72160 Horb a. N. (DE)
(72) Erfinder: Hampel, Steffen, 72108 Rottenburg (DE); Sitzler, Benjamin, 72172 Sulz am Neckar (DE)
(74) Vertreter: Zurhorst, Stefan

(56) Entgegenhaltungen:
- EP-A1- 2 974 817
- EP-A2- 1 459 859
- EP-A2- 1 992 463
- GB-A- 1 055 892
- US-A- 3 746 062
- US-A- 3 785 417

## Beschreibung

Die Erfindung betrifft ein Zerspanungswerkzeug mit den Merkmalen nach dem Oberbegriff des Anspruchs 1. Ein solches Werkzeug ist aus dem Dokument US 3746062 A bekannt.

Insbesondere in der Holzbearbeitung werden verbreitet drehend angetriebene Zerspanungswerkzeuge eingesetzt, die einen Werkzeuggrundkörper und mindestens eine, im Regelfall mehrere vom Werkzeuggrundkörper separate Schneidplatten mit je einer Schneide umfassen. Der Werkzeuggrundkörper ist mit Aufnahmetaschen versehen, in denen je eine Schneidplatte gehalten ist. Darüber hinaus ist der Werkzeuggrundkörper rückseitig der Aufnahmetaschen mit je einer radial hervorstehenden Erhebung, den sogenannten Stollen versehen. Die rückwärtige Wand der Aufnahmetaschen und die Frontfläche der Stollen bilden zusammen eine durchgehende Stützfläche, an der die einzelnen Schneidplatten mit ihrer jeweiligen Rückseite anliegen und dadurch gegen die auftretenden Schnittkräfte abgestützt sind.

Die Fertigung derartiger Werkzeuggrundkörper ist aufwändig, da wegen der Stollen eine Fertigbearbeitung durch Drehen ausscheidet. Vielmehr muss die Oberflächenkontur des Werkzeuggrundkörpers durch Formfräsen herausgearbeitet werden, wobei insbesondere zwischen den Stollen ein hoher und kostenintensiver Zerspanungsgrad anfällt. Zur Vermeidung von Unwucht ist eine hohe Fertigungsgenauigkeit erforderlich.

Ein weiteres Problem ergibt sich aus der erheblichen Geräuschentwicklung beim Betrieb solcher Zerspanungswerkzeuge, die entsprechende Schallschutzmaßnahmen erforderlich macht.

Die EP 1 992 463 A2 beschreibt ein Werkzeug mit schraubenförmig verlaufenden Befestigungsrillen. Die dadurch schräg stehenden Schneiden sollen zur Geräuschreduzierung beitragen. Aus GB 1,055,892 A ergibt sich ein Werkzeugaufbau, bei dem sich die Schneiden auf zylindrischen Teilflächen des Grundkörpers befinden, wobei die zylindrischen Teilflächen gestuft nebeneinander liegen. In EP 1 459 859 A2 ist ein Werkzeug offenbart, bei dem stirnseitige Rillen in Spiralform verlaufen. Das Werkzeug nach US 3,746,062 A ist auf seiner Oberfläche mit konzentrischen Linien versehen.

Der Erfindung liegt die Aufgabe zugrunde, ein gattungsgemäßes Zerspanungswerkzeug derart weiterzubilden, dass bei verringertem Fertigungsaufwand die Laufruhe verbessert ist.

Diese Aufgabe wird durch ein Zerspanungswerkzeug mit den Merkmalen des Anspruchs 1 gelöst.

Nach der Erfindung ist ein Zerspanungswerkzeug vorgesehen, bei dem der Werkzeuggrundkörper bezüglich der Drehachse zumindest abschnittsweise als Rotationskörper ausgebildet ist. Dabei ist auf der Oberfläche des Rotationskörpers eine Oberflächenstruktur zur Reduzierung von Schallemissionen ausgebildet. Eine solche Oberflächenstruktur kann zweckmäßig insbesondere auf einer Umfangsfläche und/oder auf mindestens einer Stirnfläche des Rotationskörpers ausgebildet sein. Als Oberflächenstruktur sind solche Strukturen gemeint, denen die umlaufende Oberfläche des Rotationskörpers zugrunde liegt, und die insbesondere in einem umlaufend rotierenden Prozess hergestellt werden. Gemäß der Erfindung ist die Oberflächenstruktur als eine in Umfangsrichtung des Rotationskörpers verlaufende Rillenstruktur ausgebildet und kann deshalb leicht durch Drehen hergestellt werden. Neben dem deutlich verringerten Fertigungsaufwand wurde im Betrieb eine erhebliche Verminderung des Geräuschpegels um mehrere Dezibel im Vergleich zu Referenzwerkzeugen beobachtet.

Die Oberflächenstruktur muss die Oberfläche des Rotationskörpers nicht vollständig bedecken, reicht jedoch vorteilhaft bis unmittelbar an den Rand der Aufnahmetasche heran, wo sie von mindestens einer Wand der Aufnahmetasche geschnitten ist. Als Besonderheit hat sich hier gezeigt, dass dort, wo sich die strukturierte Oberfläche des Rotationskörpers mit einer Aufnahmetasche für eine Schneidplatte schneidet, eine unregelmäßig geformte, wellige Taschenkante entsteht. Es wird vermutet, dass dieser wellige Kantenverlauf als aerodynamischer Turbulator wirkt und zu einem sauberen Strömungsabriss der Luft an der Taschenkante beträgt. Jedenfalls entsteht eine beachtliche Lärmreduzierung.

Alternativ oder zusätzlich kann es zweckmäßig sein, dass eine quer zur Drehrichtung verlaufende Oberflächenkante der Aufnahmetasche mit einer Fase zur Reduzierung von Schallemissionen versehen ist. Hierbei wird ein ähnlicher Wirkmechanismus vermutet, der jedenfalls in gleicher Weise beachtlich zur Lärmreduzierung beiträgt.

In vorteilhafter Weiterbildung der Erfindung ist die mindestens eine Aufnahmetasche in die Oberfläche des Rotationskörpers eingearbeitet und weist eine Stützfläche für die Schneidplatte auf, die von der Umfangskontur des Rotationskörpers begrenzt ist. Dabei liegt die Schneidplatte an der Stützfläche der Aufnahmetasche an und ragt mit ihrer Schneide aus der Aufnahmetasche frei und ungestützt über die Außenkontur des Rotationskörpers heraus.

Dort, wo der Werkzeuggrundkörper als Rotationskörper ausgebildet ist, lässt sich dessen Oberfläche leicht durch Drehen herstellen. Fräsarbeiten beschränken sich auf die Einbringung der Aufnahmetaschen für die Schneidplatten. Geometrisch betrachtet ist ein Rotationskörper gebildet, von dessen ansonsten ungestörter, drehend umlaufender Oberfläche sich die Aufnahmetaschen ausschließlich radial nach innen erstrecken, und ohne dass es radial über die ungestörte, drehend umlaufende Oberfläche hervorstehende Teile bzw. Abschnitte des Werkzeuggrundkörpers gibt. Die einzigen Teile des Zerspanungswerkzeuges, welche radial nach außen über die ungestörte, drehend umlaufende Oberfläche des Werkzeuggrundkörpers hervorstehen, sind die Schneidenbereiche der eingesetzten Schneidplatten. Dies trägt zu einem deutlich verringerten Fertigungsaufwand und zur deutlichen Verminderung des Geräuschpegels bei.

Es kann zweckmäßig sein, die einzelnen Schneidplatten in den jeweiligen Aufnahmetaschen zu verschrauben, zu verklemmen oder in anderer Weise lösbar zu befestigen. In bevorzugter Weiterbildung ist die jeweilige Schneidplatte mit der Stützfläche der Aufnahmetasche stoffschlüssig verbunden. Hierdurch ergibt sich eine flächige Befestigung der Schneidplatte mit guter Halte- und Stützwirkung, während der Werkzeuggrundkörper konstruktiv sehr einfach gehalten werden kann. Für die Schneidplatten kommen verschiedene Materialien in Betracht. Bevorzugt ist die Schneide der Schneidplatte aus polykristallinem Diamant mit entsprechen hoher Standzeit gebildet.

Ausführungsbeispiele der Erfindung sind nachfolgend anhand der Zeichnung näher beschrieben. Es zeigen:
- Fig. 1: in einer perspektivischen Ansicht ein erstes Ausführungsbeispiel eines erfindungsgemäßen Zerspanungswerkzeuges mit zylindrischer Grundform, dessen Werkzeuggrundkörper auf der Umfangsfläche und den Stirnflächen als Rotationskörper mit Rillenstruktur und eingearbeiteten Aufnahmetaschen für die Schneidplatten ausgebildet ist,
- Fig. 2: in vergrößerter Detailansicht den Umfangsbereich des Werkzeuggrundkörpers nach Fig. 1 mit Einzelheiten zur Ausgestaltung seiner Aufnahmetaschen,
- Fig. 3: die Anordnung nach Fig. 2 mit eingesetzten Schneidplatten,
- Fig. 4: eine Detailansicht des Zerspanungswerkzeuges nach Fig. 1 im Bereich seiner Stirnfläche mit Einzelheiten zu einer radial und axial offenen Aufnahmetasche, und
- Fig. 5: in einer perspektivischen Ansicht ein weiteres Ausführungsbeispiel eines erfindungsgemäßen Zerspanungswerkzeuges mit einer nur stirnseitig strukturierten Oberfläche eines Rotationskörpers.

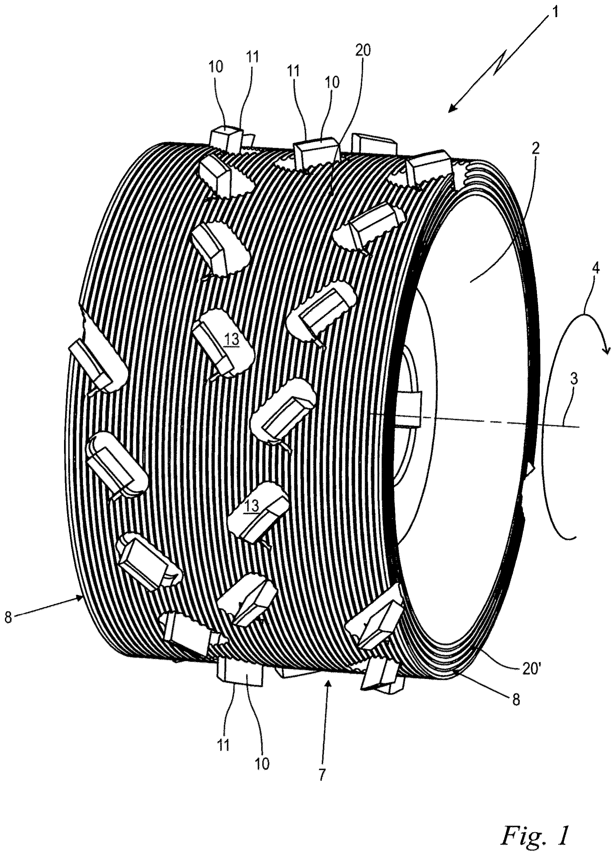

Fig. 1 zeigt in einer perspektivischen Ansicht ein erstes Ausführungsbeispiel eines erfindungsgemäßen Zerspanungswerkzeuges 1 zur spanenden Bearbeitung von Holz oder ähnlichen Werkstoffen. Als ähnliche Werkstoffe sind hier Werkstoffe mit physikalischen und technologischen Eigenschaften gemeint, die denen von Holz ähnlich sind, wie z.B. Kork, Knochen, Kunststoff, Leichtmetalllegierungen, Holzwerkstoffe wie Spanplatten, Holzfaserplatten, Sperrholz usw., und bei denen das Verfahren bei der Bearbeitung und beim Abheben von Spänen oder Teilchen ähnlich ist. Das Zerspanungswerkzeug 1 umfasst einen Werkzeuggrundkörper 2 sowie mindestens eine, hier mehrere Schneidplatten 10. Der Werkzeuggrundkörper 2 ist einteilig aus Stahl gefertigt, kann aber auch aus einem anderen geeigneten Material bestehen. Die Schneidplatten 10 sind separat vom Werkzeuggrundkörper 2 als Einzelteile ausgebildet und am Werkzeuggrundkörper 2 befestigt. Das Zerspanungswerkzeug 1 und sein Werkzeuggrundkörper 2 weisen eine gemeinsame Drehachse 3 auf. Im Betrieb wird das Zerspanungswerkzeug 1 um diese Drehachse 3 in einer Drehrichtung 4 drehend angetrieben, wobei außen liegende Schneiden 11 der Schneidplatten 10 mit einem nicht dargestellten Werkstück in Eingriff gebracht werden und Späne abheben.

Der Werkzeuggrundkörper 2 ist im gezeigten Ausführungsbeispiel im Wesentlichen zylindrisch mit einer Umfangsfläche 7 und zwei axial sich gegenüberliegenden Stirnflächen 8 ausgebildet. Im Rahmen der Erfindung kann aber auch eine Kegelform oder eine andere Form zweckmäßig sein. Jedenfalls stehen die Schneiden 11 in radialer Richtung und/oder in axialer Richtung über die Außenkontur des Werkzeuggrundkörpers 2 hervor, so dass beim Zerspanungsprozess genügend Freiraum zwischen dem Werkstück und der Oberfläche des Werkzeuggrundkörpers 2 verbleibt.

Der Werkzeuggrundkörper 2 ist bezüglich der Drehachse 3 im geometrischen Sinne zumindest abschnittsweise als Rotationskörper 20 ausgebildet. Dies bedeutet mit anderen Worten, dass in diesem Bereich die Oberfläche des Werkzeuggrundkörpers 2 durch eine 360°-Rotation einer Konturlinie um die Drehachse 3 gebildet ist. In die Oberfläche des Rotationskörpers 20 können nach der Erfindung zwar Vertiefungen beispielsweise zur Bildung von Aufnahmetaschen 13 für die Schneidplatten 10 eingearbeitet sein. Allerdings stehen keinerlei Erhebungen des Werkzeuggrundkörpers 2 über die ungestörte Oberfläche des Rotationskörpers 20 hervor. Im gezeigten Ausführungsbeispiel ist der Werkzeuggrundkörper 2 sowohl im Bereich seiner Umfangsfläche 7 als auch im Bereich seiner beiden Stirnflächen 8 vollständig als Rotationskörper 20, 20' ausgebildet. Im Rahmen der Erfindung kann es aber auch zweckmäßig sein, nur eine der beiden Stirnflächen 8, nur einen Teil der Umfangsfläche 7 oder in anderer geeigneter Weise nur einen Abschnitt des Werkzeuggrundkörpers als Rotationskörper 20 auszubilden.

In die Oberfläche des Rotationskörpers 20, 20' sind Aufnahmetaschen 13 für die Schneidplatten 10 eingearbeitet. In je einer Aufnahmetasche 13 ist je eine Schneidplatte 10 derart befestigt, dass sie mit ihrer Schneide 11 aus der Aufnahmetasche 13 über die Außenkontur des Rotationskörpers 20 herausragt. Die Schneiden 11 der Schneidplatten 10 sind bevorzugt aus polykristallinem Diamant (PKD) gebildet. Hierzu kann eine PKD-Schicht auf einen Hartmetallträger aufgesintert sein. Denkbar ist auch, dass es sich um reine PKD-Schneidlinge insbesondere mit einer Stärke zwischen 0,6 mm bis 2,0 mm handelt.

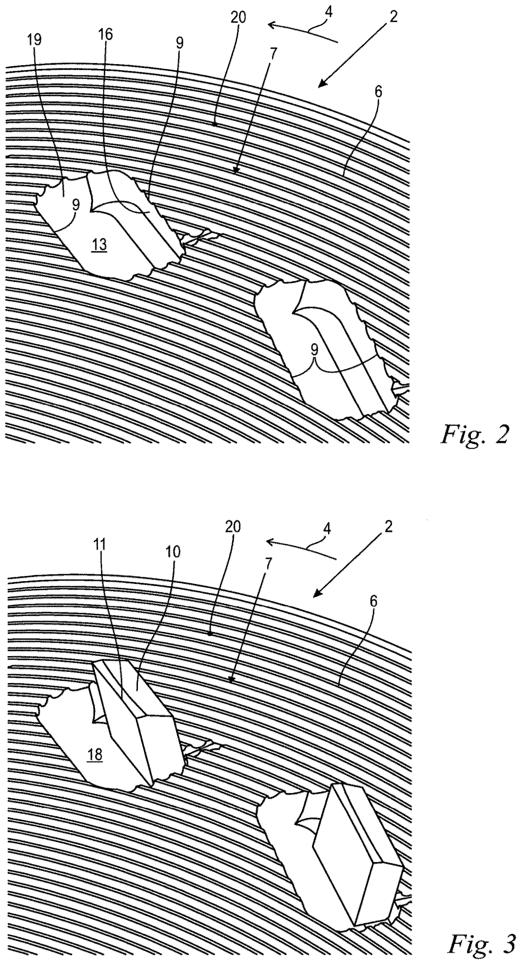

Die Fig. 2 und 3 zeigen in vergrößerter Detailansicht den Werkzeuggrundkörper 2 nach Fig. 1 im Bereich seiner Umfangsfläche 7. Abweichend von den Fig. 1, 3 sind der besseren Übersicht halber in Fig. 2 die Schneidplatten 10 nicht dargestellt. Jedenfalls ist insbesondere in Fig. 2 erkennbar, dass dort Aufnahmetaschen 13 ausgebildet sind, die sich ausgehend von der ungestörten Oberfläche des Rotationskörpers 20 radial nach innen erstrecken. Die Aufnahmetaschen 13 sind von einer umlaufenden Oberflächenkante 9 begrenzt, an welcher die Oberfläche des Rotationskörpers 20 von den Wänden der Aufnahmetasche 13 geschnitten wird. Im bezogen auf die Drehrichtung 4 rückwärtigen Bereich sind in den Aufnahmetaschen 13 Stützflächen 16 ausgebildet, an denen gemäß der Darstellung nach Fig. 3 die Schneidplatten 10 anliegen und befestigt sind. Dies kann eine Schraub- oder Klemmbefestigung sein. Im gezeigten bevorzugten Ausführungsbeispiel sind die Schneidplatten 10 auf die Stützflächen 16 aufgelötet. Im Rahmen der Erfindung kommen außer Löten auch andere stoffschlüssige Verbindungen der Schneidplatten 10 mit ihren Stützflächen 16 wie Kleben oder dergleichen in Betracht.

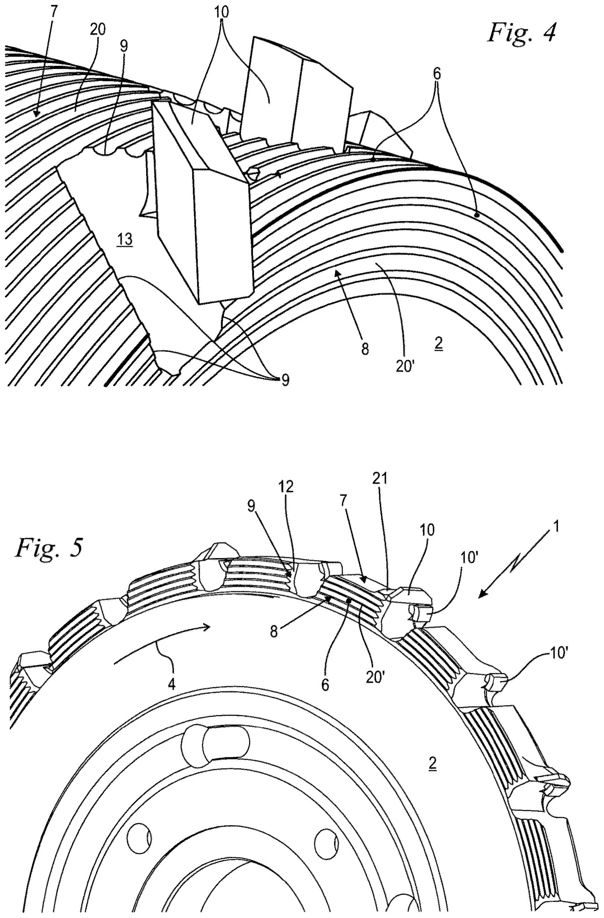

Aus der Darstellung nach Fig. 2 und der geometrischen Definition des Rotationskörpers 20 ergibt sich, dass rückwärtig der Schneidplatten 10 keine in Fig. 5 dargestellte Stollen 21 zur Abstützung vorhanden sind. Vielmehr wird die Stützfläche 16 von der Umfangskontur des Rotationskörpers begrenzt. Mit anderen Worten: Wenn man nun zwei Punkte auf der Oberflächenkante 9 betrachtet, nämlich einen beliebigen Punkt auf dem vorlaufenden Abschnitt der Oberflächenkante 9 und einen dazu korrespondierenden zweiten Punkt, der in der Drehrichtung 4 genau hinter dem ersten Punkt auf der Oberflächenkante 9 im Bereich der Stützfläche 16 liegt, so liegen beide Punkte auf gleicher axialer und radialer Position.

Des Weiteren ist in den Fig. 2, 3 noch erkennbar, dass auf der Oberfläche des Rotationskörpers 20 eine Oberflächenstruktur 6 zur Reduzierung von Schallemissionen ausgebildet ist. Die Oberflächenstruktur kann eine Rändelung oder dergleichen sein und ist im gezeigten bevorzugten Ausführungsbeispiel als eine in Umfangsrichtung des Rotationskörpers 20 verlaufende Rillenstruktur ausgebildet, welche durch Drehen hergestellt ist. Es kann zweckmäßig sein, nur einen Teil des Rotationskörpers 20 mit einer Oberflächenstruktur zu versehen. Hier jedoch weist der Rotationskörper 20 eine vollständig strukturierte Oberfläche auf. Insbesondere reicht die Oberflächenstruktur bis unmittelbar an den Rand bzw. an die Oberflächenkanten 9 der Aufnahmetaschen 13 heran, so dass die Rillenstruktur durch die Aufnahmetaschen 13 unterbrochen wird. Mit anderen Worten schneiden die Wände der Aufnahmetaschen 13 die strukturierte Oberfläche bzw. die Rillenstruktur, in dessen Folge die Oberflächenkanten 9 gezackt bzw. wellig verlaufen und als aerodynamische Turbulatoren zur Geräuschminderung wirken. Es kann aber auch zweckmäßig sein, den Rotationskörper insbesondere im Bereich der Aufnahmetaschen 13 mit einer glatten Oberfläche zu versehen.

Fig. 4 zeigt noch eine Detailansicht des Zerspanungswerkzeuges nach den Fig. 1 bis 3 im Bereich einer seiner Stirnflächen 8. Demnach ist zu erkennen, dass die Aufnahmetaschen 13 nicht nur in radialer Richtung, sondern auch in axialer Richtung offen sein können. Hier jedenfalls ist auch die als Rotationskörper 20' ausgebildete Stirnfläche 8 durch axial nach innen gehende Aufnahmetaschen 13 unter Bildung von Oberflächenkanten 9 unterbrochen. Da auch die als Rotationskörper 20' ausgebildete Stirnfläche 8 mit einer Oberflächenstruktur 6 versehen ist, ergibt sich hier ein vergleichbar welliger bzw. gezackter Verlauf der Oberflächenkanten 9. Die genannten Zusammenhänge sind hier beispielhaft an einem zylindrischen Werkzeuggrundkörper 2 mit einer als Rotationskörper 20 ausgebildeten Umfangsfläche 7 und mit als Rotationskörper 20' ausgebildeten Stirnflächen 8 beschrieben, gelten aber in analoger Weise auch für andere geometrische Grundformen des Werkzeuggrundkörpers 2.

Fig. 5 zeigt in einer perspektivischen Ansicht ein weiteres Ausführungsbeispiel eines erfindungsgemäßen Zerspanungswerkzeuges 1 mit radial hervorstehenden Schneidplatten 10 und axial hervorstehenden Schneidplatten 10'. Hier ist die Umfangsfläche 7 des Werkzeuggrundkörpers 2 nicht als Rotationskörper ausgebildet. Vielmehr sind axial erhaben Stollen 21 vorhanden, die zur rückwärtigen Stützung der radial hervorstehenden Schneidplatten 10 beitragen. Dennoch ist zumindest ein Abschnitt des Werkzeuggrundkörpers 2, nämlich eine Stirnfläche 8, als Rotationskörper 20' ausgeformt, wobei auf der Oberfläche auch dieses Rotationskörpers 20' eine Oberflächenstruktur 6 analog zur Darstellung nach den Fig. 1 bis 4 zur Reduzierung von Schallemissionen ausgebildet ist. Im Rahmen der Erfindung kann dies eigenständig der Fall sein, also ohne die weiter oben beschriebene Eigenschaft, wonach die Stützfläche 16 für die jeweilige Schneidplatte 10, 10' von der Umfangskontur des Rotationskörpers 20 begrenzt sein soll.

In Fig. 5 ist noch erkennbar, dass die Aufnahmetasche 13 im Bereich der Stirnfläche 8 mit einer quer zur Drehrichtung 4 verlaufenden Oberflächenkante 9 ausgebildet ist. Hier ist die Oberflächenstruktur 6 nicht bis unmittelbar an die Aufnahmetasche 13 herangezogen. Vielmehr ist die Oberflächenkante 9 mit einer Fase 12 zur Reduzierung von Schallemissionen versehen. In den übrigen Merkmalen, Eigenschaften und Bezugszeichen stimmt das Ausführungsbeispiel nach Fig. 5 mit demjenigen nach den Fig. 1 bis 4 überein.

## Patentansprüche

1. Zerspanungswerkzeug, umfassend einen Werkzeuggrundkörper (2) und mindestens eine vom Werkzeuggrundkörper (2) separate Schneidplatte (10) mit einer Schneide (11), wobei der Werkzeuggrundkörper (2) eine Drehachse (3) aufweist und im Betrieb des Zerspanungswerkzeuges (1) in einer Drehrichtung (4) um die Drehachse (3) rotiert, und wobei der Werkzeuggrundkörper (2) mit mindestens einer Aufnahmetasche (13) für die Schneidplatte (10) versehen ist, **dadurch gekennzeichnet, dass** der Werkzeuggrundkörper (2) bezüglich der Drehachse (3) zumindest abschnittsweise als Rotationskörper (20) ausgebildet ist, wobei auf der Oberfläche (5) des Rotationskörpers (20) eine Oberflächenstruktur (6) zur Reduzierung von Schallemissionen ausgebildet ist, und wobei die Oberflächenstruktur (6) als eine in Umfangsrichtung des Rotationskörpers (20) verlaufende Rillenstruktur ausgebildet ist.

2. Zerspanungswerkzeug nach Anspruch 1,
**dadurch gekennzeichnet, dass** die Oberflächenstruktur (6) auf einer Umfangsfläche (7) und/oder auf mindestens einer Stirnfläche (8) des Rotationskörpers (20) ausgebildet ist.

3. Zerspanungswerkzeug nach einem der Ansprüche 1 bis 2,
**dadurch gekennzeichnet, dass** die Oberflächenstruktur (6) bis unmittelbar an den Rand der Aufnahmetasche (13) heranreicht und von mindestens einer Wand der Aufnahmetasche (13) geschnitten ist.

4. Zerspanungswerkzeug nach einem der Ansprüche 1 bis 3,
**dadurch gekennzeichnet, dass** die Aufnahmetasche (13) mit einer quer zur Drehrichtung (4) verlaufenden Oberflächenkante (9) ausgebildet ist, wobei die Oberflächenkante (9) mit einer Fase (12) zur Reduzierung von Schallemissionen versehen ist.

5. Zerspanungswerkzeug nach einem der Ansprüche 1 bis 4,
**dadurch gekennzeichnet, dass** die mindestens eine Aufnahmetasche (13) in die Oberfläche des Rotationskörpers (20) eingearbeitet ist und eine von der Umfangskontur des Rotationskörpers (20) begrenzte Stützfläche (16) für die Schneidplatte (10) aufweist, und wobei die Schneidplatte (10) an der Stützfläche (16) der Aufnahmetasche (13) anliegt und mit ihrer Schneide (11) aus der Aufnahmetasche (13) über die Außenkontur des Rotationskörpers (20) herausragt.

6. Zerspanungswerkzeug nach Anspruch 5,
**dadurch gekennzeichnet, dass** die Schneidplatte (10) mit der Stützfläche (16) der Aufnahmetasche (13) stoffschlüssig verbunden ist.

7. Zerspanungswerkzeug nach Anspruch 5 oder 6,
**dadurch gekennzeichnet, dass** die Schneide (11) der Schneidplatte (10) aus polykristallinem Diamant gebildet ist.

## Claims

1. Cutting tool comprising a tool main body (2) and at least one cutting insert (10) which is separate from the tool main body (2) and which has a cutting edge (11), wherein the tool main body (2) has an axis of rotation (3) and, during operation of the cutting tool (1), rotates in a direction of rotation (4) about the axis of rotation (3), and wherein the tool main body (2) is provided with at least one receiving pocket (13) for the cutting insert (10),
**characterized in that**, in relation to the axis of rotation (3), the tool main body (2) is at least sectionally in the form of a body of rotation (20), wherein a surface structure (6), for reduction of noise emissions, is formed on the surface (5) of the body of rotation (20), and wherein the surface structure (6) is in the form of a groove structure running in a circumferential direction of the body of rotation (20).

2. Cutting tool according to Claim 1,
**characterized in that** the surface structure (6) is formed on a circumferential surface (7) and/or on at least one end face (8) of the body of rotation (20).

3. Cutting tool according to either of Claims 1 and 2,
**characterized in that** the surface structure (6) extends as far as right on the boundary of the receiving pocket (13) and is intersected by at least one wall of the receiving pocket (13).

4. Cutting tool according to one of Claims 1 to 3,
**characterized in that** the receiving pocket (13) is formed with a surface edge (9) running transversely to the direction of rotation (4), wherein the surface edge (9) is provided with a bevel (12) for reduction of noise emissions.

5. Cutting tool according to one of Claims 1 to 4,
**characterized in that** the at least one receiving pocket (13) is formed in the surface of the body of rotation (20) and has a supporting surface (16), delimited by the circumferential contour of the body of rotation (20), for the cutting insert (10), and wherein the cutting insert (10) bears against the supporting surface (16) of the receiving pocket (13) and the cutting edge (11) thereof protrudes out of the receiving pocket (13) beyond the outer contour of the body of rotation (20).

6. Cutting tool according to Claim 5,
**characterized in that** the cutting insert (10) is connected in a materially bonded manner to the supporting surface (16) of the receiving pocket (13).

7. Cutting tool according to Claim 5 or 6,
**characterized in that** the cutting edge (11) of the cutting insert (10) is formed from polycrystalline diamond.

## Revendications

1. Outil d'enlèvement de copeaux, comprenant un corps de base d'outil (2) et au moins une plaquette de coupe (10) séparée du corps de base d'outil (2) avec un tranchant (11), le corps de base d'outil (2) présentant un axe de rotation (3) et tournant autour de l'axe de rotation (3) dans une direction de rotation (4) pendant le fonctionnement de l'outil d'enlèvement de copeaux (1), et le corps de base d'outil (2) étant muni d'au moins une poche de réception (13) pour la plaquette de coupe (10),
**caractérisé en ce que** le corps de base d'outil (2) est réalisé sous forme de corps de rotation (20) au moins par sections par rapport à l'axe de rotation (3), une structure de surface (6) étant réalisée sur la surface (5) du corps de rotation (20) pour réduire les émissions sonores, et la structure de surface (6) étant réalisée sous la forme d'une structure rainurée s'étendant dans la direction périphérique du corps de rotation (20).

2. Outil d'enlèvement de copeaux selon la revendication 1,
**caractérisé en ce que** la structure de surface (6) est réalisée sur une surface périphérique (7) et/ou sur au moins une surface frontale (8) du corps de rotation (20).

3. Outil d'enlèvement de copeaux selon l'une quelconque des revendications 1 à 2, **caractérisé en ce que** la structure de surface (6) s'étend directement jusqu' au bord de la poche de réception (13) et est coupée par au moins une paroi de la poche de réception (13).

4. Outil d'enlèvement de copeaux selon l'une quelconque des revendications 1 à 3, **caractérisé en ce que** la poche de réception (13) est réalisée avec une arête de surface (9) s'étendant transversalement à la direction de rotation (4), l'arête de surface (9) étant munie d'un chanfrein (12) pour réduire les émissions sonores.

5. Outil d'enlèvement de copeaux selon l'une quelconque des revendications 1 à 4, **caractérisé en ce que** l'au moins une poche de réception (13) est usinée dans la surface du corps de rotation (20) et présente une surface d'appui (16) pour la plaquette de coupe (10) délimitée par le contour périphérique du corps de rotation (20), et la plaquette de coupe (10) s'appliquant sur la surface d'appui (16) de la poche de réception (13) et dépassant par son tranchant (11) de la poche de réception (13) au-delà du contour extérieur du corps de rotation (20).

6. Outil d'enlèvement de copeaux selon la revendication 5,
**caractérisé en ce que** la plaquette de coupe (10) est reliée à la surface d'appui (16) de la poche de réception (13) par liaison de matière.

7. Outil d'enlèvement de copeaux selon la revendication 5 ou 6,
**caractérisé en ce que** le tranchant (11) de la plaquette de coupe (10) est formé de diamant polycristallin.
